# EUROPEAN PATENT APPLICATION

(11) **EP 3 340 538 A1**
(43) Date of publication of application: **27.06.2018**
(21) Application number: 16306738.2
(22) Date of filing: 20.12.2016
(51) Int. Cl.: H04L 12/28, H04N 21/24, H04N 21/422, H04N 21/442, H04L 29/08, H04N 21/475

(54) **CONTENT DELIVERY MONITORING METHOD AND APPARATUS USING AN INFOTAINMENT SYSTEM**

(71) Applicant: Thomson Licensing, 92130 Issy-les-Moulineaux (FR)
(72) Inventor: VOSSEN, Danny, 2650 Edegem (BE)
(74) Representative: Huchet, Anne

(57) **Abstract**

A method and apparatus is provided comprising establishing communication between an infotainment processor and a device and selecting a plurality of critical elements having parameter conditions to be met. The content communicated between information processor and the device is then tracked so as to detect when parameter conditions are triggered. An alert is then sent to a user via the infotainment processor when the condition(s) are met.

## Description

### TECHNICAL FIELD

The present disclosure relates generally to a content delivery system and more particularly to a content delivery system using an infotainment system.

### BACKGROUND

This section is intended to introduce the reader to various aspects of art, which may be related to various aspects that are described and/or claimed below. This discussion is believed to be helpful in providing the reader with background information to facilitate a better understanding. Accordingly, it should be understood that these statements are to be read in this light, and not as admissions of prior art.

Computers have been used to coordinate information between multiple locations since their inception. The use of processors in a variety of smart devices have allowed for the incorporation of computers in many of the daily tasks. In turn, the concept of a network of smart devices in use with one another that can accomplish tasks or address one or more needs is becoming very popular. The Internet- of-things (IoT) provide some such concepts and has gained popularity but the use of smart devices or their capabilities are not limited to IOT.

The concept of allowing one or more connected devices including sensors to enable actions and monitor status remotely is becoming a reality. The advent of wireless devices and mobile technology have made the integration of processes and access to technology much easier. The main goal to provide such interconnectivity is to allow the users to carry out their everyday activities in a seamless manner. However, these tasks and activities would be made easier by intelligent devices that work in concert to support them in a mostly hidden way. Unfortunately, despite the technology becoming smaller and more connected, the applications that allow their integration into the daily environment has only marginally improved. Therefore, more connected and integrated technology is desirous that can provide an intelligent system where only the user interface remains perceivable by users. Such technology should be personalized, context aware, anticipatory and adaptive to provide the most efficient results.

### SUMMARY

A method is provided comprising establishing communication between a device and an infotainment processor and selecting a plurality of critical elements having parameter conditions. The content communicated between the device and the infotainment processor is tracked to determine if any parameters conditions have been met and if so an alert is sent to a user via said infotainment processor when any parameter conditions have been met.

In another embodiment, an infotainment apparatus is provided comprising a processor configured to communicate with a device and a control module for establishing a set of critical elements having associated parameters such that value of the parameter can trigger a condition to be met. A data analysis module is also configured to determine a transition that characterizes likelihood of a trigger condition being met so that the control module, responsive to the data analysis, can sending a user an alert when at least one condition has been met.

Additional features and advantages are realized through the techniques of the present disclosure. Other embodiments and aspects are described in detail herein and are considered for a better understanding.

### BRIEF DESCRIPTION OF THE DRAWINGS

The present disclosure will be better understood and illustrated by means of the following embodiment and execution examples, in no way limitative, with reference to the appended figures on which:
Figure 1 is a block diagram depiction of a computer system as used according to one embodiment;
Figure 2 is a block diagram depiction of a depiction of a network and system including a vehicle infotainment device according to one embodiment;
Figure 3A is a block diagram depiction according to one embodiment providing an infotainment system such as discussed in conjunction with Figure 2;
Figure 3B provides a more detailed set up of a high level architecture according to one embodiment and as discussed in conjunction with Figure 3A;
Figure 4 is a block diagram depiction of an exemplary illustration of a possible scenario;
Figure 5 is an exemplary depiction of a scenario as discussed in conjunction with Figures 3 and 4;
Figure 6 is an exemplary embodiment showing a display as discussed in connection with the embodiment of Figure 3;
Figure 7 is an exemplary embodiment depicting a multiuser environment;
Figure 8 is a flow chart depiction according to one embodiment; and
Figure 9 is a block diagram showing example of a generated report according to one embodiment.

Wherever possible, the same reference numerals will be used throughout the figures to refer to the same or like parts.

### DESCRIPTION

It is to be understood that the figures and descriptions have been simplified to illustrate elements that are relevant for a clear understanding of the present concepts, while eliminating, for purposes of clarity, many other elements found in typical digital multimedia content delivery methods and systems. However, because such elements are well known in the art, a detailed discussion of such elements is not provided herein. The disclosure herein is directed to all such variations and modification. In addition, various inventive features are described below that can each be used independently of one another or in combination with other features. Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

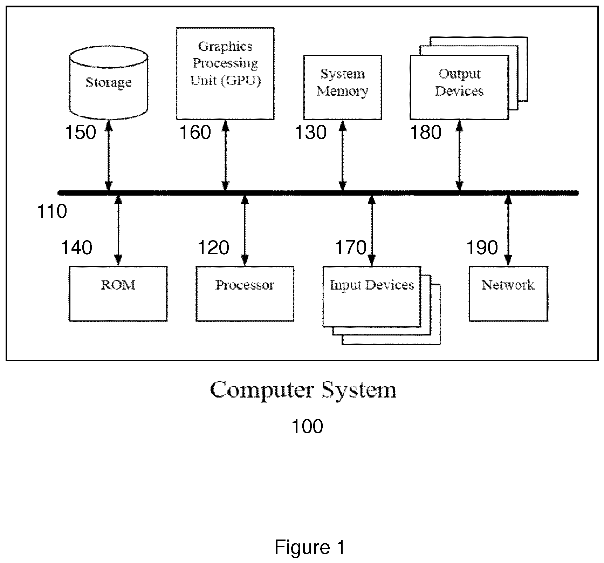

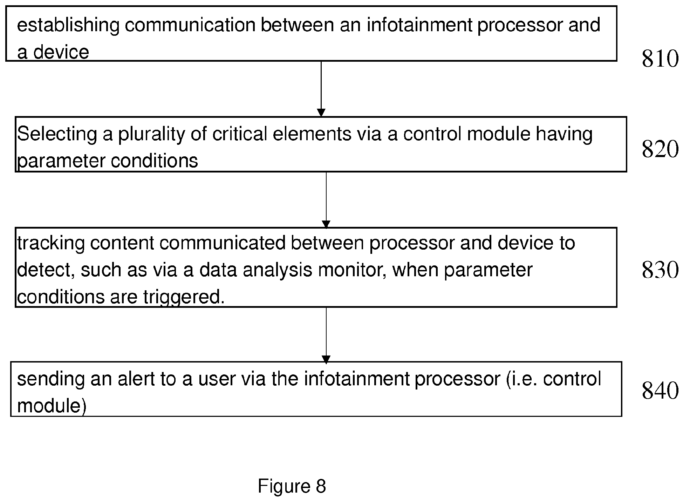

Figure 1 is a schematic block diagram illustration of a computer system 100 such as one that can be used in conjunction with different embodiments as will be discussed. The computer system 100 may be implemented using various appropriate devices. For instance, the computer system may be implemented using one or more personal computers ("PC"), servers, mobile devices (e.g., a Smartphone), tablet devices, and/or any other appropriate devices. The various devices may work alone (e.g., the computer system may be implemented as a single PC) or in conjunction (e.g., some components of the computer system may be provided by a mobile device while other components are provided by a tablet device). The computer system 100 may include one or more bus or bus systems such as depicted by 110, at least one processing element 120, a system memory 130, a read-only memory ("ROM") 140 , other components (e.g., a graphics processing unit) 160, input devices 170, output devices 180, permanent storage devices 130, and/or a network connection 190. The components of computer system may be electronic devices that automatically perform operations based on digital and/or analog input signals. The processing element 120 can have other components such as a control module and a data analysis module (not illustrated individually) as discussed in Figure 8.

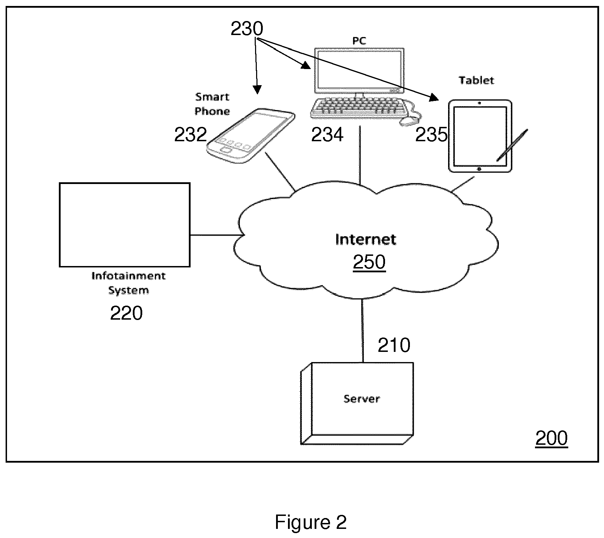

Figure 2 illustrates a block diagram of an embodiment of a system 200 for delivering content to a user of an infotainment system is displayed. The system 200 may include a server 210 and one or more electronic devices 230 such mobile devices including smart phones (e.g., a companions device) 232, personal computers (PCs) 234 such as laptops and tablets (235). The infotainment system 220 itself can include the computer system 100 of Figure 1 entirely or be in processing communication to one or more of the units shown through the user of the network 250 which forms part of the system network 200. Each electronic or mobile device 230 can also have its own displays, processors and other components as can be appreciated by those skilled in the art. In addition, the server 210 and other components may be directly connected, or connected via the network 250 which may include one or more private networks, the Internet or others.

Referring back to the infotainment component or system 220, an infotainment unit is generally referred to as a computer or a device with a processor that provides a variety of services such as those that provide data content for both information and entertainment. Entertainment content may include any media content used for entertainment. In addition, one or more displays, processing components and user interfaces can be provided as part of the infotainment system 220 (such as discussed in conjunction to input and output devices 170 and 180 of Figure 1). While the term is sometimes used to indicate system that are built into or residing in a vehicle (car, plane, boat, cruise-ships or other types of vessels and navigational units), they are used here more expansively and include computers of all kinds including mobile devices, gateways, set top boxes, servers, or other processors that may be in a free standing device or part of other devices and networks.

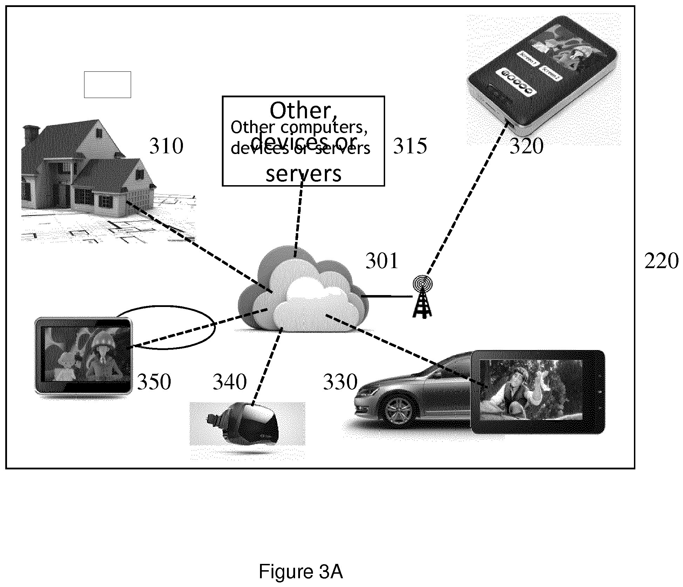

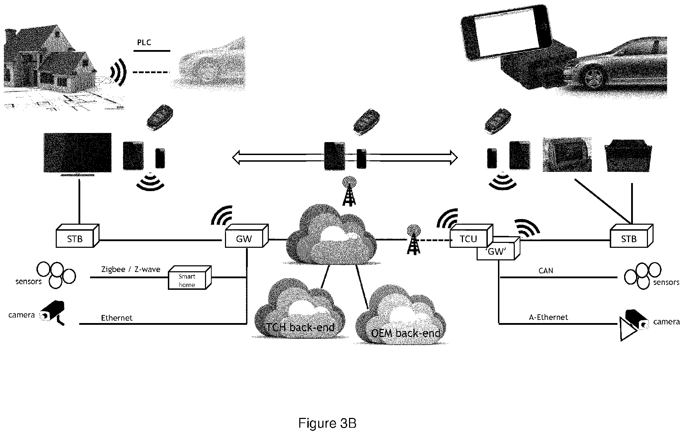

Figure 3A is a block diagram depiction providing one example of an infotainment system 220 that can be used in a variety of different environments. In Figure 3A, one or more units represent the infotainment in its entirely or a plurality of units may be in processing communication with one another (such as the example used in Figure 3 through the cloud 301) or other units as discussed. In Figure 3A, the infotainment units can be located as a computer at a house, business, hospital or any other buildings as shown at 310, or be part of a vehicle 330 or a mobile device such as a smart phone 320 or tablet 350 or even a virtual reality (VR) or augmented reality (AR) device such as a head mounted unit shown at 340. One or more sensors, cameras or other units and components can also be provided in conjunction with the infotainment system 220.

In one embodiment, the infotainment services and application provided can even be part of a website that provides a variety of functions and services such as those that can include social medial websites and applications being used daily by billions of users worldwide. In another embodiment, the infotainment system is a set top box or has a set top box included in it to deliver services and application to a user's home such as through a subscription.

In one embodiment, the infotainment system or the server used in Figure 2, also provide support for the management and delivery of over the top content (OTT). As known to those skilled in the art, in broadcasting OTT provides for delivery of audio, video, and other media over the Internet without the involvement of a multiple system operator in the control or distribution of the content. In one embodiment, OTT can also include content from a third party that is delivered to an end-user, by simply transporting IP packets. In another embodiment, text messaging can also be provided. In one embodiment, OTT messaging can also be provided throughout the same system such as one using one or more instant messaging services (as an alternative to text messaging) such as one provided by a mobile network provider. In one embodiment, one or more users may access the OTT service provider via the server and use their companion devices (e.g., the electronic devices such as smartphones, tablets, or PCs) to manage their subscription and purchased content. In addition, a navigation system can be provided as part of vehicle infotainment system 220 or as part of the network 250 or through the server 210. The navigation system, for example can include one or more positioning device(s) such as a global positioning system (GPS).

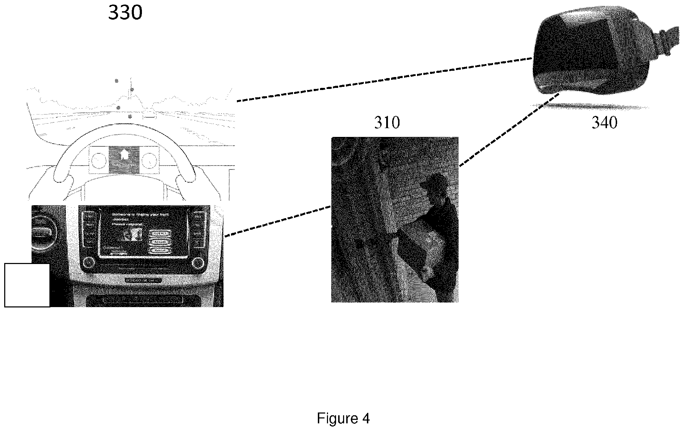

Figure 3B provides a more detailed set up of a high level architecture for one embodiment as provided in Figure 3A. In one embodiment, a two way or multi directional communication can be set up between the multiple devices such as home, smart phone and car. In this way, the status of different users and locations can be monitored. For example, notifications on changes in the home (i.e. car is being towed) and in the car (burglar alarm just went off) can be provided. In addition, from the car, the temperature is adjusted prior to the home arrival. Users can talk with the people at the front door and remotely let them in if needed and lock and unlock doors to the car or other locations. In one embodiment, even the health status at the home of an elderly can be checked. An example is provided in Figure 4.

In Figure 4, an exemplary illustration is depicted. In this example, a package is being delivered to a person's home. In one embodiment, the ringing of a door bell at a home (previously referenced as 310) does not provide any reaction but the cameras or one or more sensors capture the delivery of a package and the ringing of a door bell. The owner of the house, in this case is in a car travelling. The information is then provided to the owner via an infotainment unit in the owner's car (previously referenced as 330) or through a mobile device. In this case, the owner will then communicate to its son who is at home and listening to music through a VR device to open the door and take the delivered package. Instantaneously, the owner can also respond to the door bell and inform the person delivering the package that someone is on its way to open the door. In other scenarios, an alert is sent both to the son and the owner together and the son can respond to the delivery on his own through the VR device (previously referenced as 340). Yet, in another scenario the son is watching TV and the set-top box becomes the medium for communication. In a further scenario, no one is at home and the owner or the son communicate directly with the delivery person through a camera and their infotainment devices to provide instructions as what should be done with the package. In one embodiment, different outcomes may ensue depending on the location or availability of the owner. For example, if the owner is driving a photo snapchat can occur with the delivery person but if the owner is in a parked vehicle or not the driver of the car, a video conference can occur when the door bell is rung. In another scenario, the same or other actions may occur depending on the availability other people being at the house at that time. Even if there is someone at the house, if that person is otherwise engaged, they may not be able to attend to the door. Selection of actions to be taken, then will vary and may be controlled by the owner (in the car) or others that are inside the home at the time. In one embodiment, default or automatic options may also be set up ahead of time.

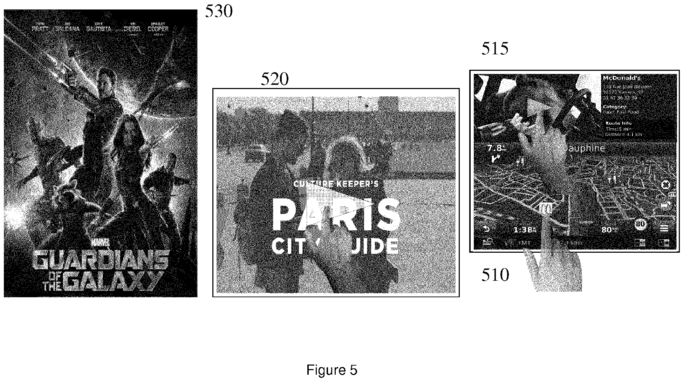

In Figure 5, both information and entertainment can be provided as was discussed in conjunction with the examples of Figures 3 and 4. In this embodiment, the occupant of a car can ask for information such as provided by a map 510, as for location of fast food places 515 (on the map or on route to a destination) or keep up with events happening in a city 520 (through, for example a city guide). The vehicle occupants can also watch movies or other entertainment 530. However, the user does not have to be in a car and can do the same activities while watching television at home through a set top box or at work through a lap top. In a different embodiment, different users located in different locations can plan activities together. For example a family can plan an upcoming trip together while each are at different locations. In this scenario, the mother is at work while the son is driving and the daughter is at home playing a video game using a set top box. Together they can look at different options such reviewing events happening at a city, pick a location based on the events and plan a route together by looking at the different diving routes. Control can be shared or be given to one or more persons during these activities as will be discussed later.

In addition, the information can be transferred from one device of the system into another. For example, a movie that was started in a car can be seamlessly continued on a mobile device once the user leaves the car. Similarly, a driving route planned on a home device (i.e. set top box) can be provided seamlessly once the user becomes the occupant of a vehicle. In another embodiment, a monitoring system is set up to check status of an elderly person driving a car or even check on the position and body vitals of the person in a variety of different locations.

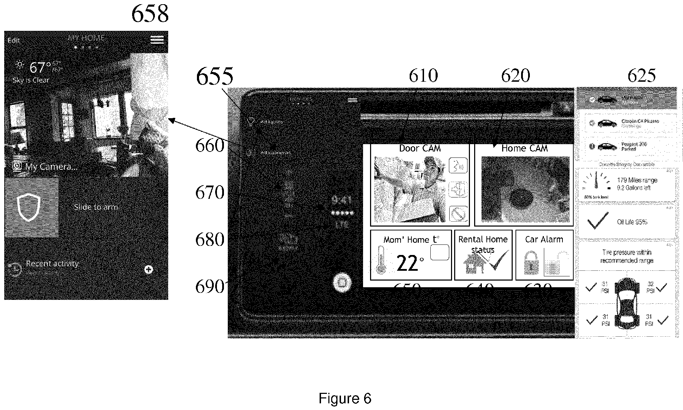

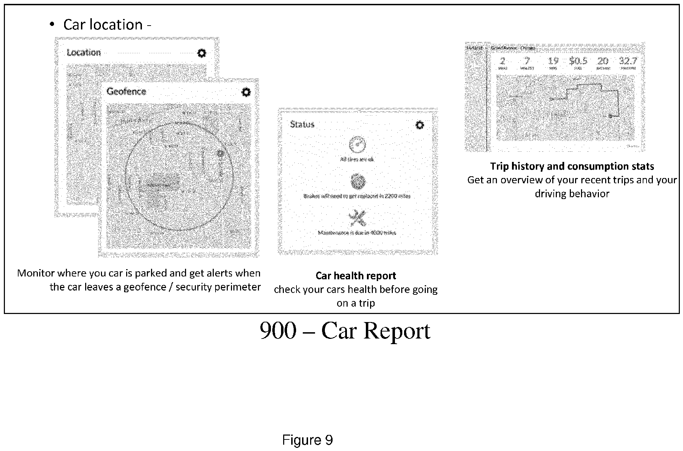

In Figure 6 an example of a screen is provided that can be located at any of the units such as the ones discussed in connection with the example of Figure 3. The screen shows different camera views of a door camera 610, a room camera 620 and provides other information such as a car alarm 630, home temperature (can be of the same or a second home) 640 and the status of the home (can be even a third home) 650. The connection can be provided through an OTT, a connected home (gateway or set top box) or through an IoT. Depending on where the information is displayed, other information can be also provided for example volume (to radio on a car or television on a set top box) 660, the time 670 or other information about the interior of a car or home (lights 680 or menu 690). Other information can also be provided. In the example of Figure 6, specifics about a family fleet of cars is provided as referenced by 625. The particulars of one of the vehicles belonging to the owner (a Stingray Corvette Convertible) is then separately selected so that more information about it can displayed. In this example, the additional information about the car (such as from a set top box) has to do with status of gas, oil and the tires in the car. The user can monitor this information for a variety of reasons such as to plan service ahead of time or calculate the expenses associated with the car for a financial ledger. Such information about the car or other monitored activity (health etc.) can then be gathered and separately displayed or printed at a later time. In one embodiment, such information can be gathered and selected for monitoring. An example of this is provided in Figure 9 (under car report 900), generally for ease of understanding.

In the example of Figure 6, the user can also select to click on the camera button and again select a particular view, such as camera view of an elderly parent's home shown. Clicking on the camera (655), in one embodiment provides an expanded view (referenced as 658). The expanded view can include a variety of information such as a live image of a room, the outside or inside temperature, status of a security perimeter alarm, or even recent activities of the elder relative and a monitoring history.

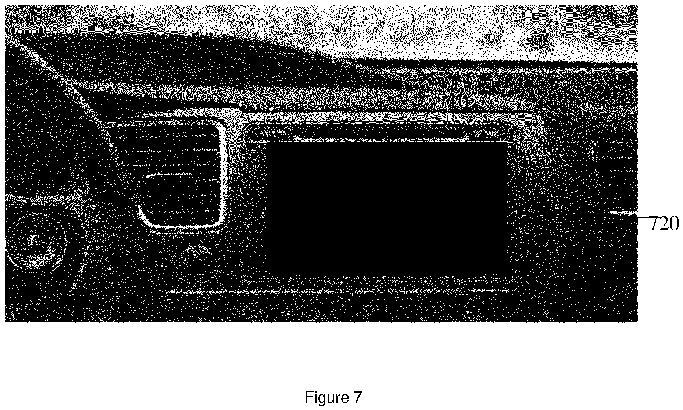

Figure 7 provides the depiction of yet another example. In Figure 7, different members of a family are travelling separately and using a plurality of separate devices. In this scenario, one family member decides to watch the movie "Batman" but prior to the start of the movie persuades others to watch the movie simultaneously (reference 710). A command is then issued by one of them to display the movie "Batman" on every device (here in every car as referenced by 720). In one embodiments, the will be an option to accept or reject such viewing by other members that did not issue the command. In another embodiment, other members can suggest other selections after rejecting the viewing.

Furthermore, when multiple users are sharing the same system such as discussed in conjunction with Figure 7, control can be set up to be provided by a single user (i.e. parent with respect to location) or a particular device or location (always home no matter the user). In alternate embodiments, control can be shared such that there is a give and take. In other embodiments limited control can be given to each unit. In example provided in Figure 7, three family members' mom M, son S and daughter D are each watching Batman concurrently in three different locations (vehicles). The control is shared. At some point S points out to a detail that the other two have missed. S then rewinds the movie so they can all review it. Ten minutes later, M has to stop to take a phone call from the office. She takes local control and pauses the movie and restarts it after 10 minutes. S and D are now out of synch with M since they continued watching the movie for the 10 minutes that she had paused it. In yet another scenario, M has total control so that she can set parental controls for S and D so that they can never watch violent movies even though they may have selected such a movie. In another embodiment, access of some information can be restricted to some members even when viewing is being shared simultaneously. In yet another embodiment, simultaneous individual messaging by different family members or friends that are sharing such viewing can be displayed alongside other images and information.

Figure 8 is a flow chart depiction according to one embodiment. As shown a method is provided comprising establishing communication between an infotainment processor and another device as shown in step 810. A plurality of critical elements is then selected (such as via a control module) having parameter conditions as provided in step 820. The content communicated between the processor and the device is then tracked in step 830 (such as via a data analysis monitor) in order to determine if and when parameter conditions are triggered. Once such conditions are triggered, an alert is sent to a user as discussed earlier. In one embodiment, the alert can be sent via the infotainment processor (i.e. control module) as shown in step 840.

## Claims

1. A method, comprising:
- establishing communication (810) between a device and an infotainment processor;
- selecting (820) a plurality of critical elements having parameter conditions to be met;
- tracking (830) content communicated between said device and said infotainment processor to determine if any parameter conditions have been met;
- sending (840) an alert to a user via said infotainment processor when any parameter conditions have been met.

2. The method of claim 1, wherein communication is established and monitored between said infotainment processor and several devices concurrently.

3. The method of claim 1 or 2, wherein an alert is sent to a plurality of users on separate devices.

4. The method of claim 1 or 2, wherein said device has an Internet of Things (IoT) service interface protocol layer.

5. An infotainment apparatus, comprising:
- a processor configured to communicate (810) with a device, said device being configured for sending or receiving data;
- a control module for establishing (820) a set of critical elements having associated parameters; such that a value of said parameter can trigger a condition to be met;
- a data analysis module configured to determine (830) a transition that characterizes likelihood of a trigger condition being met;
said control module responsive to said data analysis and being configured to send a user an alert (840) when at least one condition has been met.

6. The apparatus of claim 5, wherein the processor is configured to s establish and monitor communication between the infotainment apparatus and several devices concurrently.

7. The apparatus of claim 6, wherein the control module is configured to send an alert to a plurality of users on separate devices.

8. The method of any one of claims 1 to 4 or the apparatus of any one of claims 5 to 7, wherein at least one of said other devices is one of a mobile device, a gateway, a set-top box and a mobile device

9. The method of any one of claims 1 to 4 and 8 or the apparatus of any one of claims 5 to 8, wherein said infotainment processor is associated with a mobile device.

10. The method of any one of claims 1 to 4 and 8-9 or the apparatus of any one of claims 5 to 9, wherein said critical elements are set up by said user.

11. The method of any one of claims 1 to 4 and 8 to 10 or the apparatus of any one of claims 5 to 10 , wherein content delivery is provided to a plurality of devices simultaneously and said simultaneous content delivery is presented to at least two displays associated with different users via said infotainment processor.

12. The method or apparatus of claim 13, wherein at least a portion of delivery of content is not presented to a second user because of restrictions provided on content delivery to said second user by a first user.

13. The method of any one of claims 1 to 4 and 8 to 12 or apparatus of any one of claims 1 to 12, wherein said other device comprises a sensor.

14. A computer program product for a programmable apparatus, the computer program product comprising a sequence of instructions for implementing a method according to any one of claims 1 to 7 when loaded into and executed by the programmable apparatus.
